# EUROPEAN PATENT APPLICATION

(11) **EP 2 666 647 A1**
(43) Date of publication of application: **27.11.2013**
(21) Application number: 12736303.4
(22) Date of filing: 17.01.2012
(51) Int. Cl.: B60B 27/00, B60B 35/02, F16C 19/18, F16C 33/64

(54) **ROLLING BEARING DEVICE FOR VEHICLE WHEEL**

(30) Priority: 18.01.2011 JP 2011007845
(71) Applicant: JTEKT Corporation, Osaka-shi, Osaka 542-8502 (JP)
(72) Inventor: YOKOTA, Tatsuya, Osaka-shi, Osaka 542-8502 (JP); OKUMURA, Tsuyoshi, Osaka-shi, Osaka 542-8502 (JP); SEO, Nobuyuki, Osaka-shi, Osaka 542-8502 (JP)
(74) Representative: Winter, Brandl, Fürniss, Hübner, Röss, Kaiser, Polte - Partnerschaft
(86) International application number: PCT/JP2012/050761
(87) International publication number: WO 2012/099081

(57) **Abstract**

To provide a rolling bearing device that is for a vehicle wheel and that is able to achieve both securing rigidity and lightness of weight of a faucet section that is formed in a manner so as to protrude from a flange surface that attaches the vehicle wheel. The present invention is provided with: a hub shaft (10) that has a flange section (11) and a shaft-shaped section (15) and to which an inner ring raceway is formed on the outside peripheral surface of the shaft-shaped section; an outer ring member (30) provided at the outer periphery of the shaft-shaped section and to which an outer ring raceway is formed on the inside peripheral surface; and a plurality of rolling elements provided between the inner ring raceway and the outer ring raceway. The flange section is formed to one side in the direction of the rotation axis (ZS), and a cylindrical faucet section (13) that protrudes to one side is formed at the flange surface coaxially to the hub shaft. The boundary section of the flange surface and the outer peripheral surface of the faucet section is formed from an arced boundary surface (M2) that is smoothly continuous from the outer peripheral surface (M3) of the faucet section (13) to the flange surface (M1), and the surface roughness of the boundary surface (M2) is finished to a finer surface roughness than the surface roughness of the flange surface (M1) and the surface roughness of the outer peripheral surface (M3) of the faucet section.

## Description

### Technical Field

The present invention relates to a wheel rolling bearing unit to be used as a wheel bearing for vehicles or the like.

### Background Art

Recent vehicles or the like are requested to be lighter in weight (improvement in fuel efficiency) to comply with CO₂ emission regulations and also requested to be higher in rigidity to improve safety and mobility; hence, wheel rolling bearing units are also requested to be lighter in weight and higher in rigidity.
In a wheel rolling bearing unit to be used as a wheel bearing for vehicles or the like, the diameter thereof on the inboard side (the inward side of a vehicle) is determined to be relatively small in relation to suspension-related components (a knuckle, a carrier or the like) to which the bearing unit is connected (the diameter is determined so as to conform to the diameter depending on weight reduction or the like of the suspension-related components to which the bearing unit is connected). Furthermore, although the diameter of the bearing unit on the outboard side (the outward side of the vehicle) having a flange surface on which a wheel is mounted has a higher degree of design freedom than the diameter on the inboard side, if the diameter is made equal to or less than the diameter on the inboard side, required rigidity cannot be obtained securely in some cases.
For this reason, in the conventional art described in Patent Document 1, a rolling bearing unit in which the diameter on the outboard side is made larger than the diameter on the inboard side so as to securely obtain rigidity has been disclosed.
Furthermore, in the conventional art described in Patent Document 2, a wheel bearing unit in which the diameter on the outboard side is made larger than the diameter on the inboard side so as to securely obtain required rigidity and in which a proper bearing clearance range can be obtained securely has been disclosed.
Moreover, in the conventional art described in Patent Document 3, a wheel bearing unit in which the diameter on the outboard side is made larger than the diameter on the inboard side so as to securely obtain required rigidity and in which assembly work can be simplified has been disclosed.

### Prior Art Document

### Patent Document

Patent Document 1: JP-A-2004-108449
Patent Document 2: JP-A-2008-089131
Patent Document 3: JP-A-2008-151247

### General Description of the Invention

### Problem that the Invention is to solve

In all the bearing units described in Patent Documents 1 to 3, the diameter on the outboard side is made larger than the diameter on the inboard side to improve rigidity, and a concave section is provided to attain weight reduction in the outboard-side central section of the flange surface on which a wheel is mounted. Furthermore, around the concave section, a spigot joint section cylindrically extended in the direction of the rotation axis is formed, and the outside diameter of the spigot joint section is made slightly smaller than the diameter of the hole formed at the central section of a wheel to be mounted.
Although the outside diameter of the cylindrical spigot joint section has been determined by requirements on the side of the wheel and cannot be changed, the inside diameter of the spigot joint section (the diameter of the concave section) can be changed appropriately. In the case that the inside diameter of the spigot joint section is made larger and the thickness of the cylindrical spigot joint section is made thinner, the weight can be reduced, but the rigidity necessary for the wheel to be mounted is lowered; on the other hand, in the case that the inside diameter of the spigot joint section is made smaller and the thickness thereof is made thicker, the rigidity is improved, but the weight increases.
In the conventional arts described in Patent Documents 1 to 3, nothing is described with respect to the spigot joint section satisfying both weight reduction and securing of rigidity.

The present invention is made in consideration of the these points, and it is an object of the present invention to provide a wheel rolling bearing unit capable of satisfying both weight reduction and securing of rigidity in a spigot joint section formed so as to protrude from a flange surface on which a wheel is mounted. Means for solving the Problem

To solve the above-mentioned problem, a wheel rolling bearing unit according to the present invention takes the following measures.
First, a first aspect of the present invention provides a wheel rolling bearing unit comprises a hub spindle having a flange section on which a wheel to be is mounted and which is formed into a flange shape and a shaft-shaped section, an inner-ring raceway surface being formed on an outer peripheral surface of the shaft-shaped section, an outer ring member disposed around an outer periphery of the shaft-shaped section of the hub spindle, an outer-ring raceway surface being formed on an inner peripheral surface thereof corresponding to the inner-ring raceway surface, and a plurality of rolling elements disposed rotatably in an annular accommodation space formed between the inner-ring raceway surface and the outer-ring raceway surface.
The flange section is formed on one side in a direction of a rotation axis of the hub spindle, and on a flange surface which is a surface on one side of the flange section in the direction of the rotation axis, a cylindrical spigot joint section protruding on the one side is formed coaxially with the hub spindle.
Furthermore, a boundary section of the flange surface and an outer peripheral surface of the spigot joint section is formed so as to have an arc-shaped boundary surface where the outer peripheral surface of the spigot joint section is smoothly connected toward the flange surface, and finishing is performed so that a surface roughness of the boundary surface is finer than a surface roughness of the flange surface and a surface roughness of the outer peripheral surface of the spigot joint section.

According to this first aspect, reduction in fatigue strength due to reduction in surface texture on the boundary surface of the boundary section where the stress from the mounted wheel or the like is concentrated can be suppressed.
Hence, the thickness of the spigot joint section can be made thinner uniformly while rigidity equivalent to or more than that of the conventional spigot joint section is securely obtained, and both weight reduction and securing of rigidity can be satisfied.

Next, a second aspect of the present invention provides a wheel rolling bearing unit comprises a hub spindle having a flange section on which a wheel is to be mounted and which is formed into a flange shape and a shaft-shaped section, an inner-ring raceway surface being formed on an outer peripheral surface of the shaft-shaped section, an outer ring member disposed around an outer periphery of the shaft-shaped section of the hub spindle, an outer-ring raceway surface being formed on an inner peripheral surface thereof corresponding to the inner-ring raceway surface, and a plurality of rolling elements disposed rotatably in an annular accommodation space formed between the inner-ring raceway surface and the outer-ring raceway surface.
The flange section is formed on one side in a direction of a rotation axis of the hub spindle, on a flange surface which is a surface on one side of the flange section in the direction of the rotation axis, a cylindrical spigot joint section protruding on the one side is formed coaxially with the hub spindle, and a plurality of hub bolts for mounting the wheel is provided in the flange section in parallel with the direction of the rotation axis so as to surround the spigot joint section.
Furthermore, a non-bolt position thickness which id a thickness of the spigot joint section in a radial direction around an intersection point of a non-bolt position straight line which is a straight line drawn in the radial direction from the rotation axis of the hub spindle toward each intermediate position between hub bolts adjacent to each other and the spigot joint section is made thinner than a bolt position thickness which is a thickness of the spigot joint section in the radial direction around an intersection point of a bolt position straight line which is a straight line drawn in the radial direction from the rotation axis toward each hub bolt and the spigot joint section.

According to this second aspect, with respect to the thickness of the spigot joint section, the non-bolt position thickness is made thinner than the bolt position thickness.
Hence, the thickness of the spigot joint section can be made thinner partially while rigidity equivalent to or more than that of the conventional spigot joint section is securely obtained, and both weight reduction and securing of rigidity can be satisfied.

### Brief Description of the Drawings

FIGS. 1(A) and 1(B) are views illustrating examples showing a wheel rolling bearing unit 1 according to the present invention, FIG. 1(A) being a cross-sectional view, taken along the rotation axis ZS thereof, and FIG. 1(B) being a front view; and
FIG. 2 is a view showing a state in which a wheel WH is mounted on the wheel rolling bearing unit 1 according to the present invention and an enlarged view showing a part of the spigot joint section 13 thereof.

### Modes for Carrying Out the Invention

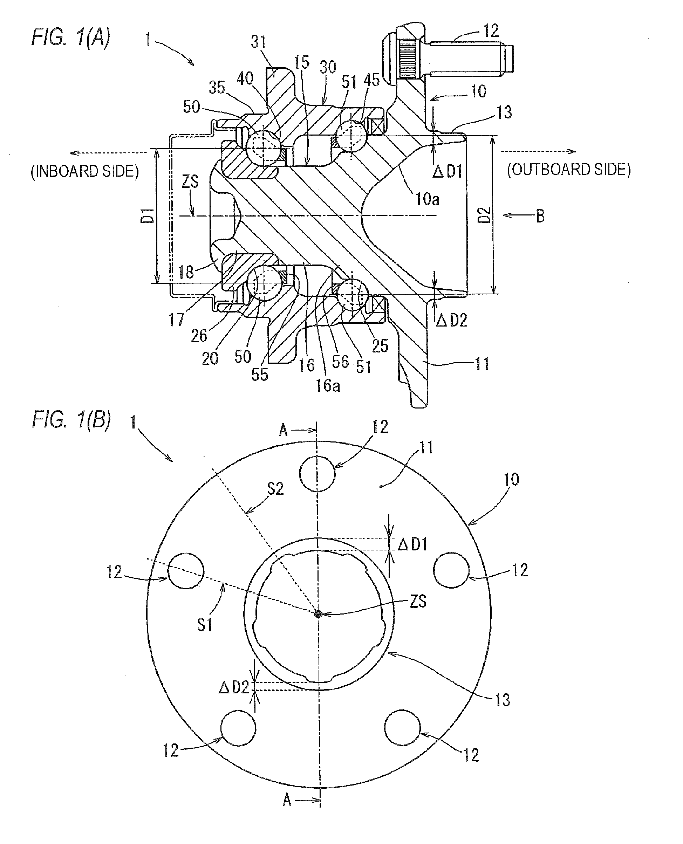

Modes for embodying the present invention will be described below using the drawings. FIG. 1(A) is an example of a cross-sectional view showing a wheel rolling bearing unit 1 according to the present invention, taken along the rotation axis ZS thereof, and FIG. 1(B) is an example of a front view showing the wheel rolling bearing unit 1. The view seen from the direction B in FIG. 1(A) is FIG. 1(B), and the A-A cross-sectional view in FIG. 1(B) is FIG. 1(A).
An inboard side is the inward side of a vehicle in the direction of the rotation axis ZS of the wheel rolling bearing, and an outboard side is the outward side of the vehicle in the direction of the rotation axis ZS.

### • [Overall structure of wheel rolling bearing unit 1 (FIGS. 1(A) and 1(B))]

As shown in FIG. 1(A), the wheel rolling bearing unit 1 (a so-called wheel hub unit) is equipped with a hub spindle 10 integrally having a shaft-shaped section 15 serving as an inner ring member constituting a double-row angular contact ball bearing and a flange section 11; an outer ring member 30; balls 50 on the inboard side row of the double rows; balls 51 on the outboard side row; a cage 55 for retaining the plurality of balls 50 at equal intervals; a cage 56 for retaining the plurality of balls 51 at equal intervals, these being formed into a unit.

On the hub spindle 10, a small-diameter section 17 and a large-diameter section 16 are formed into a stepped shaft shape from the inboard side of the rotation axis ZS, and a large-diameter shoulder section 16a having a larger diameter is formed on the outboard side of the large-diameter section 16.
Furthermore, the flange section 11 is formed on the outboard side, one side of the shaft-shaped section 15 in the direction of the rotation axis ZS, and a spigot joint section 13 being extended in a cylindrical shape is formed on the outboard-side flange surface of the flange section 11.
An inner ring element 26 is fitted on the outer peripheral surface of the small-diameter section 17 of the hub spindle 10, and the inboard-side end section of the hub spindle 10 is calked in the radial direction, whereby a calked section 18 is formed and the inner ring element 26 is integrally secured to the hub spindle 10.
Furthermore, an inboard-side inner-ring raceway surface 20 is formed on the outer peripheral surface of the inner ring element 26 (the outer peripheral surface of the shaft-shaped section 15 of the hub spindle 10 being integrated).
Moreover, an outboard-side inner-ring raceway surface 25 is formed on the outer peripheral surface of the large-diameter shoulder section 16a of the hub spindle 10 (the outer peripheral surface of the shaft-shaped section 15 of the hub spindle 10).

The outer ring member 30 is disposed around the outer periphery of the shaft-shaped section 15, and on the inboard side of the outer ring member 30, a fitting shaft section 35 to be fitted into the mounting holes of vehicle body side members including a knuckle, a carrier or the like (not shown) supported by the suspension device of the vehicle is formed.
In addition, on the outer peripheral surface of the outer ring member 30 adjacent to the fitting shaft section 35, a vehicle body flange section 31 that is secured with bolts or other means when the vehicle body side members are mounted thereon is formed (bolt holes or the like are not shown).
Furthermore, on the inner peripheral surface of the outer ring member 30, an inboard-side outer-ring raceway surface 40 corresponding to the inboard-side inner-ring raceway surface 20 of the hub spindle 10 (the inner ring element 26) and an outboard-side outer-ring raceway surface 45 corresponding to the outboard-side inner-ring raceway surface 25 of the hub spindle 10 are formed with a predetermined distance provided therebetween in the direction of the rotation axis ZS.

In the accommodation space formed between the inboard-side inner-ring raceway surface 20 and the inboard-side outer-ring raceway surface 40, a plurality of balls 50 are arranged rotatably in a state of being retained in the cage 55. In addition, in the accommodation space formed between the outboard-side inner-ring raceway surface 25 and the outboard-side outer-ring raceway surface 45, a plurality of balls 51 are arranged rotatably in a state of being retained in the cage 56.
Furthermore, a required preload is applied respectively to the plurality of balls 50 and the plurality of balls 51 by the calking force exerted by the calked section 18 of the hub spindle 10.

Moreover, in the wheel rolling bearing unit 1 to be described in the embodiments of the present invention, as shown in FIGS. 1(A) and 1(B), when it is assumed that the pitch circle diameter of the inboard-side balls 50 is D1 and that the pitch circle diameter of the outboard-side balls 51 is D2, a setting is made so that the relationship of pitch circle diameter D1 < pitch circle diameter D2 is obtained.
In other words, in order that the wheel rolling bearing unit 1 is made lighter in weight and higher in rigidity while the outside diameter dimension of the fitting shaft section 35 of the outer ring member 30 surely has a size insertable into the assembly holes of the vehicle body side members, the pitch circle diameter D2 is set so as to be larger than the pitch circle diameter D1, and the diameter of the balls 51 on the outboard side row is set so as to be smaller than the diameter of the ball 50 on the inboard side row. Accordingly, the number of the balls 51 on the outboard side row is larger than the number of the balls 50 on the inboard side row.

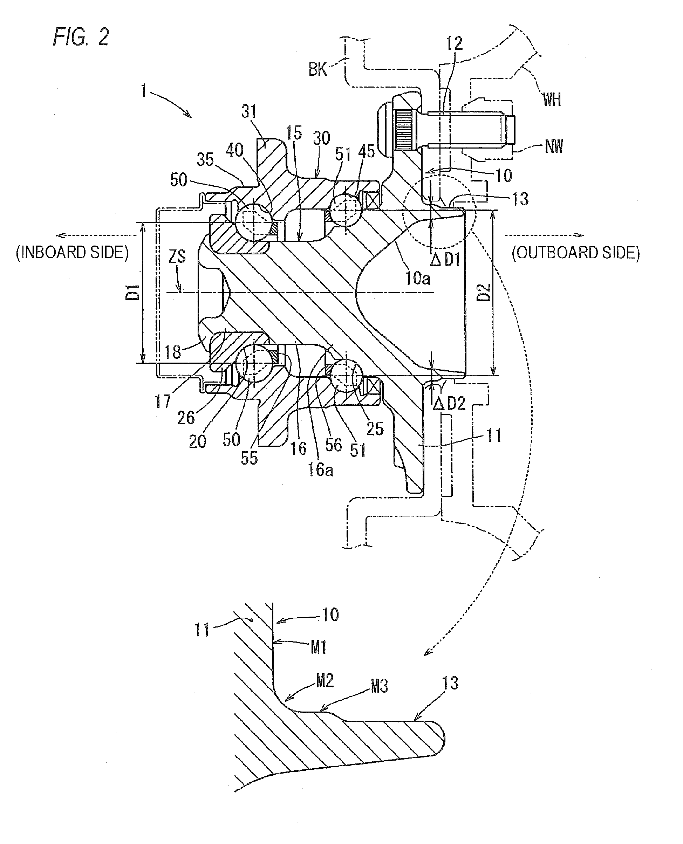

The hub spindle 10 integrally has the shaft-shaped section 15 having a nearly cylindrical shape and the flange section 11 formed on the outboard side of the shaft-shaped section 15 coaxially (with the shaft-shaped section 15) (coaxial with respect to the rotation axis ZS) and extended in the radial direction. In addition, on a flange surface M1 (refer to FIG. 2) on the outboard side of the flange section 11, the spigot joint section 13 cylindrically extended to the outboard side is formed coaxially with the shaft-shaped section 15 and the flange section 11 so as to protrude. Furthermore, at the flange section 11, a plurality of hub bolts 12 for tightening a wheel are fixed at a predetermined pitch. Moreover, so as to surround the spigot joint section 13, the plurality of hub bolts 12 are provided in parallel with the direction of the rotation axis ZS.
What's more, as shown in FIG. 2, the center hole of a brake rotor BK and the center hole of a wheel WH are fitted around the spigot joint section 13 from the side of the flange surface M1 serving as the outboard-side surface of the flange section 11, and nuts NM are tightened onto the hub bolts 12, whereby the wheel WH is mounted on the wheel rolling bearing unit 1.

Still further, a hollow concave section 10a is formed in a direction from the inner peripheral surface of the spigot joint section 13 toward the inboard side.
The concave section 10a is formed deep so as to have a diameter as large as possible while a required thickness is left between the concave section and the outboard-side inner-ring raceway surface 25, whereby required rigidity is securely obtained and utmost possible weight reduction is attained.
Since the center holes of the brake rotor BK and the wheel WH are fitted as described above and the center holes have been determined, the outside diameter of the spigot joint section 13 cannot be changed. Hence, the diameter of the concave section 10a (the inside diameter of the spigot joint section 13) is set so that a thickness capable of securely providing required rigidity for the spigot joint section 13 is obtained and so that a larger diameter is obtained to reduce weight.

In the wheel rolling bearing unit 1 according to the present invention, although the thickness of the spigot joint section 13 is made thinner uniformly or partially to realize further weight reduction without the thickness of the spigot joint section 13 not being made thicker, the spigot joint section can securely obtain rigidity equivalent to that of a spigot joint section having a conventional thickness.

### • [First embodiment (FIG. 2)]

In a first embodiment, the surface roughness of an arc-shaped (in cross-section) boundary surface M2 at a boundary section where the outer peripheral surface M3 of the spigot joint section 13 is smoothly connected to the flange surface M1 is made finer (refer to FIG. 2).
As shown in FIG. 2, since the stress from the brake rotor BK and the wheel WH is concentrated in the boundary surface M2 (round chamfered section) of the spigot joint section 13, reduction in fatigue strength may occur. Hence, the surface roughness of the boundary surface M2 is made finer by turning or grinding.

For example, in the case of turning, the flange surface M1 and the outer peripheral surface M3 of the spigot joint section 13 are machined so that an arithmetic average roughness of Ra = 6.3 [µm] is obtained; and in the case of machining the boundary surface M2, the machining is performed at a low feed rate so that Ra = 2.5 [µm] is obtained.
As a result, reduction in fatigue strength due to reduction in surface texture can be suppressed and reliability in strength can be improved further.
Hence, since the rigidity of the spigot joint section 13 can be improved further, the thickness of the spigot joint section 13 can be made thinner uniformly while rigidity equivalent to or more than that of the conventional spigot joint section is securely obtained, and both weight reduction and securing of rigidity can be satisfied.

### • [Second embodiment (FIGS. 1(A) and 1(B))]

In a second embodiment, while attention is paid to the fact that the brake rotor BK and the wheel WH are secured to the flange section 11 of the hub spindle 10 using the plurality of hub bolts 12, the thickness at positions on the spigot joint section 13 not corresponding to the positions of the hub bolts 12 is made thinner partially.
As shown in FIG. 1(B), it is assumed that the radial thickness of the spigot joint section 13 around the intersection point of a non-bolt position straight line S2 (refer to FIG. 1(B)) serving as a straight line drawn in the radial direction from the rotation axis ZS toward each intermediate position between the hub bolts 12 adjacent to each other and the spigot joint section 13 is a non-bolt position thickness ΔD2.
In addition, it is assumed that the radial thickness of the spigot joint section 13 around the intersection point of a bolt position straight line S1 (refer to FIG. 1(B)) serving as a straight line drawn in the radial direction from the rotation axis ZS toward each hub bolt 12 and the spigot joint section 13 is a bolt position thickness ΔD1.

Furthermore, a setting is made so that the relationship of non-bolt position thickness ΔD2 < bolt position thickness ΔD1 is obtained, whereby the required rigidity is securely obtained at the spigot joint section 13 and the thickness of the spigot joint section 13 is made thinner partially. For example, a setting is made so that non-bolt position thickness ΔD2 : bolt position thickness ΔD1 = 1 : 1.1 is obtained.
This partially thinned shape can be formed relatively easily by using a punch that is made by hot forging or the like so as to have the inside diameter shape of the spigot joint section 13.
Hence, the thickness of the spigot joint section 13 can be made thinner partially while rigidity equivalent to or more than that of the conventional spigot joint section is securely obtained, and both weight reduction and securing of rigidity can be satisfied.
As described above, in the second embodiment, the optimal shape of the concave section 10a can be provided, the rigidity of the spigot joint section 13 can be suppressed from being lowered, and further weight reduction can be attained.

The wheel rolling bearing unit 1 according to the present invention is not limited to have the external appearance, configuration, structure, shape or the like described in the embodiments, but various modifications, additions and deletions can be made without changing the gist of the present invention.
Furthermore, both weight reduction and securing of rigidity can be satisfied by applying at least one of the wheel rolling bearing unit 1 described in the first embodiment and the wheel rolling bearing unit 1 described in the second embodiment.
Moreover, the numerical values used in the description of the embodiments are examples and not limited thereto.

This application is based upon Japanese Patent Application No. 2011-007845 filed on January 18, 2011, the entire contents of which are incorporated herein by reference.

### Industrial Applicability

With the wheel rolling bearing unit according to the present invention, both weight reduction and securing of rigidity can be satisfied in the spigot joint section formed so as to protrude from the flange surface on which a wheel is mounted.

### Description of Reference Numerals and Signs

- 1: wheel rolling bearing unit
- 10: hub spindle
- 10a: concave section
- 11: flange section
- 12: hub bolt
- 13: spigot joint section
- 15: shaft-shaped section
- 20, 25: inner-ring raceway surface
- 30: outer ring member
- 40, 45: outer-ring raceway surface
- 50, 51: ball
- 55, 56: cage
- BK: brake rotor
- M1: flange surface
- M2: boundary surface
- M3: outer peripheral surface (of spigot joint section 13)
- S1: bolt position straight line
- S2: non-bolt position straight line
- WH: wheel
- ZS: rotation axis
- ΔD1: bolt position thickness
- ΔD2: non-bolt position thickness

## Claims

1. A wheel rolling bearing unit comprising:
a hub spindle having: a flange section on which a wheel is to be mounted and which is formed into a flange shape; and a shaft-shaped section, an inner-ring raceway surface being formed on an outer peripheral surface of the shaft-shaped section;
an outer ring member disposed around an outer periphery of the shaft-shaped section of the hub spindle, an outer-ring raceway surface being formed on an inner peripheral surface thereof corresponding to the inner-ring raceway surface; and
a plurality of rolling elements disposed rotatably in an annular accommodation space formed between the inner-ring raceway surface and the outer-ring raceway surface, wherein
the flange section is formed on one side in a direction of a rotation axis of the hub spindle,
on a flange surface which is a surface on one side of the flange section in the direction of the rotation axis, a cylindrical spigot joint section protruding on the one side is formed coaxially with the hub spindle,
a boundary section of the flange surface and an outer peripheral surface of the spigot joint section is formed so as to have an arc-shaped boundary surface where the outer peripheral surface of the spigot joint section is smoothly connected toward the flange surface, and
finishing is performed so that a surface roughness of the boundary surface is finer than a surface roughness of the flange surface and a surface roughness of the outer peripheral surface of the spigot joint section.

2. A wheel rolling bearing unit comprising:
a hub spindle having: a flange section on which a wheel is to be mounted and which is formed into a flange shape; and a shaft-shaped section, an inner-ring raceway surface being formed on an outer peripheral surface of the shaft-shaped section;
an outer ring member disposed around an outer periphery of the shaft-shaped section of the hub spindle, an outer-ring raceway surface being formed on an inner peripheral surface thereof corresponding to the inner-ring raceway surface; and
a plurality of rolling elements disposed rotatably in an annular accommodation space formed between the inner-ring raceway surface and the outer-ring raceway surface, wherein
the flange section is formed on one side in a direction of a rotation axis of the hub spindle,
on a flange surface which is a surface on one side of the flange section in the direction of the rotation axis, a cylindrical spigot joint section protruding on the one side is formed coaxially with the hub spindle,
a plurality of hub bolts for mounting the wheel is provided in the flange section in parallel with the direction of the rotation axis so as to surround the spigot joint section, and
a non-bolt position thickness which is a thickness of the spigot joint section in a radial direction around an intersection point of a non-bolt position straight line which is a straight line drawn in the radial direction from the rotation axis of the hub spindle toward each intermediate position between hub bolts adjacent to each other and the spigot joint section is made thinner than a bolt position thickness which is a thickness of the spigot joint section in the radial direction around an intersection point of a bolt position straight line which is a straight line drawn in the radial direction from the rotation axis toward each hub bolt and the spigot joint section.
